# EUROPÄISCHE PATENTSCHRIFT

(11) **EP 2 922 982 B1**
(45) Veröffentlichungstag und Bekanntmachung des Hinweises auf die Patenterteilung: **03.11.2021**
(21) Anmeldenummer: 13795486.3
(22) Anmeldetag: 25.11.2013
(51) Int. Cl.: C08F 2/18, C09D 101/02, C09D 103/02, C09D 103/12, C09D 105/04, C09D 105/12, C09D 133/06, C09D 189/00, C09D 197/00, C09D 7/61, C09D 7/40, C23C 22/34, C23C 22/74, C09D 5/08, C23C 18/12, C09D 105/00, C09D 105/08, C09D 105/02, C09D 189/06, C09D 105/06

(54) **VERFAHREN ZUM BESCHICHTEN VON METALLISCHEN OBERFLÄCHEN VON SUBSTRATEN UND NACH DIESEM VERFAHREN BESCHICHTETEN GEGENSTÄNDE**
METHOD FOR COATING METAL SURFACES OF SUBSTRATES, AND OBJECTS COATED ACCORDING TO SAID METHOD
PROCÉDÉ DE REVÊTEMENT DE SURFACES MÉTALLIQUES DE SUBSTRATS ET OBJETS REVÊTUS PAR CE PROCÉDÉ

(30) Priorität: 26.11.2012 DE 102012221520
(43) Veröffentlichungstag der Anmeldung: 30.09.2015
(73) Patentinhaber: Chemetall GmbH, 60487 Frankfurt am Main (DE)
(72) Erfinder: WASSERFALLEN, Daniel, 55128 Mainz (DE); SCHWAMB, Michael, 60325 Frankfurt (DE); FRENKEL, Aliaksandr, 60385 Frankfurt (DE); SOTKE, Vera, 60316 Frankfurt am Main (DE); BREMSER, Wolfgang, 33100 Paderborn (DE); DROLL, Martin, 33189 Schlangen (DE); SEEWALD, Oliver, 34431 Marsberg (DE); EILINGHOFF, Ron, 60487 Frankfurt (DE); GEROLD, Stephanie, 33102 Paderborn (DE); NIESEN, Evgenija, 59494 Soest (DE); SCHACHTSIEK, Lars, 33102 Paderborn (DE); TRAUT, Manuel, 59069 Hamm (DE)
(74) Vertreter: BASF IP Association
(86) Internationale Anmeldenummer: PCT/EP2013/074575
(87) Internationale Veröffentlichungsnummer: WO 2014/080007

(56) Entgegenhaltungen:
- EP-A1- 2 154 266
- WO-A1-94/12570
- WO-A1-2005/001158
- WO-A1-2011/093282
- WO-A2-02/31065
- US-A- 5 534 082
- US-A1- 2005 103 229
- None

## Beschreibung

Die Erfindung betrifft ein Verfahren zur Beschichtung von metallischen Oberflächen sowie eine entsprechende wässrige Beschichtungszusammensetzung. Es existieren zahlreiche Methoden, um auf insbesondere metallischen Oberflächen mittels Tauchverfahren homogene Beschichtungen zu erzeugen. Hierbei benutzt man für die Erzeugung von insbesondere Korrosionschutzbeschichtungen vorwiegend bestehend aus einer organischen Matrix und/oder organischen und/oder anorganischen Zusatzkomponenten vorzugsweise in den nachfolgend beschriebenen Techniken.

US 7,294,362 bezieht sich auf ein wässriges Mittel enthaltend Chitosan und eine Metallverbindung, die ein Metall ausgewählt aus Ti, Zr, Hf, Mo, W, Se, Ce, Fe, Cu, V und dreiwertigem Cr enthält, zur Behandlung von Metallmaterialien.

EP 2154266 betrifft eine Oberflächenbehandlungsflüssigkeit für Metallmaterial auf Zinkbasis zur Ausbildung einer Beschichtung, umfassend ein metallisches Element, ausgewählt aus Ti, Zr und Hf, eine Iminoverbindung, eine Fluorverbindung und ein metallisches Element, ausgewählt aus der Gruppe Mg, Al, Zn, Cu und Co, sowie auf Verfahren zur Oberflächenbehandlung für Materialien auf Zinkbasis.

WO 2011/093282 betrifft eine Oberflächenbehandlungsmembran und ein Mittel sowie Verfahren zur Oberflächenbehandlung.

WO 2005/001158 bezieht sich auf eine wässrige Zusammensetzung, umfassend Zirkoniumionen, Polysaccharid, Phosphat und ein Alkalisalz einer Carbonsäure oder eine Carbonsäure, zur Bildung von Konversionsbeschichtungen auf Aluminium-Oberflächen.

US 5,534,082 ist auf Verfahren zur Behandlung von Metalloberflächen mit wässrigen sauren Zusammensetzungen zur Verbesserung des Korrosionsschutzes gerichtet und betrifft insbesondere die Behandlung von Aluminium und Legierungen davon. WO 02/31065 betrifft ein Verfahren zur Beschichtung von metallischen Oberflächen mit unter anderem einer sauren wässrigen Dispersion, umfassend einen organischen Filmbildner, Kationen oder/und Hexa- bzw. Tetrafluorokomplexen von Kationen ausgewählt aus Titan, Zirkonium, Hafnium, Silicium, Aluminium und Bor, sowie mindestens eine anorganische Verbindung in Partikelform.

WO 94/12570 betrifft Verfahren und chromfreie saure wässrige Zusammensetzungen zur Behandlung von Metalloberflächen, um den Korrosionsschutz und die Haftung von Lacken zu verbessern, wobei die Zusammensetzung insbesondere ein Polymersystem und eine Verbindung ausgewählt aus Fluorzirkonsäure, Fluortitansäure und Fluorhafniumsäure oder z.B. Ammoniumzirkoniumcarbonat umfasst.

Die klassischen Verfahren beruhen auf der Nutzung der rheologischen Eigenschaften der verwendeten Formulierungen, um eine vollständige Beschichtung eines gefügten Werkstückes zu erzielen. Obwohl durch kontinuierliches Rotieren des betreffenden Werkstückes nach dem Tauchvorgang eine Ansammlung von Beschichtungsmaterial an kritischen Stellen reduziert werden kann, ist es mit dieser Methode nicht möglich eine vollständig homogene Beschichtung zu erzielen. Zusätzlich können bei Stellen mit höheren Beschichtungsanteilen während des Trocknungs- und/oder Vernetzungsvorgangs Fehlstellen wie Blasenbildung und Kocher entstehen, die die Qualität der gesamten Beschichtung beeinträchtigen.

Die elektrophoretischen Verfahren vermeiden diese Problematik, indem elektrischer Strom eingesetzt wird, um eine gleichmäßige Beschichtung im Tauchen abzuscheiden. Mit dieser Methode gelingt die Erzeugung von homogenen Beschichtungen auf metallischen Werkstücken. Die abgeschiedenen Beschichtungen zeigen eine ausgesprochen gute Haftung im nassen Zustand zum metallischen Untergrund. Ohne Ablösung der Beschichtung ist es möglich, das Werkstück in einem nachfolgenden Spülschritt zu behandeln. Dies führt dazu, dass die vorab genannten schwer zugänglichen Stellen am Werkstück von überstehender Lackierlösung befreit werden und somit keine Fehlstellen während des Trocknungsvorgangs entstehen können. Diese Technik hat den Nachteil, dass neben der Menge an elektrischer Energie und neben den notwendigen Tauchbecken, die zu einer Erhöhung der Kosten führen, auch sogenannte Kantenfluchten auftreten, da elektrische Felder an makroskopischen Kanten inhomogen aufgebaut werden und die Kanten ungleichmäßig und eventuell auch unvollständig beschichtet werden. Bei dem Aufbau der Werkstücke müssen zudem Hohlräume vermieden werden, da an diesen Stellen ein Effekt vergleichbar mit dem Phänomen des Faraday'schen Käfigs auftritt. Aufgrund der Reduktion der zum Abscheiden notwendigen elektrischen Feldstärken kann an solchen Bereichen am Werkstück keine oder nur eine stark verringerte Beschichtung durch das Verfahren aufgebracht werden (Umgriffsproblematik), was zu einer Beeinträchtigung der Beschichtungsqualität führt. Zusätzlich weist diese Technik bei einer elektrischen Tauchlackierung (ETL) wie z.B. bei der kathodischen Tauchlackierung (KTL) die folgenden Nachteile auf: Ein entsprechendes Tauchbad ist zusammen mit allen elektrischen und mechanischen Einrichtungen von der Temperaturführung, Stromversorgung und elektrischen Isolierung, Umwälzeinrichtung und Zugabeeinrichtung bis zur Entsorgung der Anolyt-Säure, die bei der elektrolytischen Beschichtung entsteht, und mit einer Ultrafiltration zur Lackrezyklierung sowie Steuereinrichtungen sehr aufwendig aufgebaut. Die Prozessführung erfordert einen sehr hohen technischen Aufwand auch aufgrund der großen Stromstärken und Energiemengen sowie bei der Vergleichmäßigung der elektrischen Parameter über das Badvolumen und bei der präzisen Einstellung aller Prozessparameter sowie bei der Wartung und Säuberung der Anlage.

Die bekannten autophoretischen Verfahren beruhen auf einem stromlosen Konzept bestehend aus einem Beizangriff der eingesetzten Substratoberfläche, bei der Metallionen aus der Oberfläche herausgelöst werden und aufgrund der Konzentration an metallischen Ionen an der entstehenden Grenzfläche eine Emulsion koaguliert. Obwohl diese Verfahren nicht oben genannter Einschränkung der elektrolytischen Verfahren bezüglich dem Faraday'schen Käfigeffektes aufweisen, müssen die bei dem Prozess entstandenen Beschichtungen nach dem ersten Aktivierungsschritt in einem aufwendigen mehrstufigen Tauchverfahren fixiert werden. Desweiteren führt der Beizangriff zu einer unvermeidbaren Verunreinigung der aktiven Zone durch Metallionen, die aus den Zonen entfernt werden müssen. Zudem beruht die Methode auf einem chemischen Abscheidungsprozess, der nicht selbstregulierend ist und bei Bedarf nicht abgebrochen werden kann, wie z. B. durch das Ausschalten des elektrischen Stromes bei den elektrolytischen Verfahren. Somit ist bei einer längeren Verweildauer der metallischen Substrate in den aktiven Zonen die Ausbildung einer zu hohen Schichtstärke unvermeidbar.

Es ist ein lange verfolgter Wunsch, homogene Beschichtungen in einem Tauchprozess effizient und kostengünstig auszubilden, um hieraus möglichst geschlossene und im Wesentlichen ebene Beschichtungen in größerer Dicke herzustellen.

Es besteht daher die Aufgabe, ein Verfahren vorzuschlagen, mit dem über ein flüssiges System und bei Bedarf auch spülresistent auf metallischen Oberflächen homogen, flächendeckend auf einfache Weise eine Lackformulierung abgeschieden werden kann. Es bestand ferner die Aufgabe, ein möglichst einfaches Verfahren hierfür vorzuschlagen.

Die Aufgabe wird gelöst mit einem Verfahren zum Beschichten von metallischen Oberflächen von Substraten umfassend die Schritte oder bestehend aus den Schritten:
I. Bereitstellen eines Substrats mit einer gereinigten, metallischen Oberfläche,
II. Kontaktieren und Beschichten metallischen Oberflächen mit einer wässerigen Zusammensetzung in Form Dispersion und/oder Suspension,
III. gegebenenfalls Spülen der organischen Beschichtung und
IV. Trocknen und/oder Einbrennen der organischen Beschichtung oder
V. gegebenenfalls Trocknen der organischen Beschichtung und Beschichten mit einer gleichartigen oder weiteren Beschichtungszusammensetzung vor einem Trocknen und/oder Einbrennen,
wobei in Schritt II die Beschichtung mit einer wässerigen Zusammensetzung in Form einer Dispersion und/oder Suspension erfolgt, die ein komplexes Fluorid ausgewählt aus der Gruppe bestehend aus Hexa- oder Tetrafluoriden der Elemente Titan, Zirkon, Hafnium, Silizium, Aluminium und/oder Bor in einer Menge von 1,1 10⁻⁶ mol/l bis 0,30 mol/l bezogen auf die Kationen enthält, wobei einer anionisch stabilisierten Dispersion aus filmbildenden Polymeren mit einem Feststoffgehalt von 2 bis 40 Gew.-% und einer mittleren Partikelgröße von 10 bis 1000 nm, die im pH-Wertbereich von 0,5 bis 7,0 stabil ist, mindestens ein anionischer Polyelektrolyt in einer Menge von 0,01 bis 5,0 Gew.-% bezogen auf die gesamte Masse des resultierenden Gemisches zugesetzt wird, wobei die wässerige Zusammensetzung einen pH-Wert im Bereich von 0,5 bis 7,0 aufweist und eine Beschichtung auf Basis eines ionogenen Gels ausbildet, welches die aus der metallischen Oberfläche herausgelösten Kationen bindet, wobei diese Kationen aus einer Vorbehandlungsstufe und/oder aus der Kontaktierung im Schritt II stammen, wobei der mindestens eine anionische Polyelektrolyt ausgewählt ist aus Polysacchariden auf Basis von Alginaten, Pektinen und Gellan Gum, und wobei die wässerige Zusammensetzung in der Dispersion aus filmbildenden Polymeren einen Gehalt an organischen Partikeln auf Basis von Polyacrylaten, Polyurethanen, Polyepoxiden und/oder deren Hybriden aufweist. Der erfindungsgemäße Zusatz von komplexen Fluoriden führt zu weitgehend homogenen Beschichtungen mit Trockenschichtdicken im Bereich von 20 µm bis 100 µm auf verzinktem Stahlblech und zu Trockenschichtdicken > 1 µm auf kaltgewalztem Stahlblech oder Aluminium.

Vorzugsweise wird das komplexe Fluorid in einer Menge von 1,1 10⁻⁵ mol/l bis 0,15 mol/l, vorzugsweise 1,1 10⁻⁴ mol/l bis 0,05 mol/l bezogen auf die Kationen eingesetzt, wobei die wässerige Zusammensetzung einen pH-Wert im Bereich von 1,0 bis 6,0, besonders bevorzugt 1,5 bis 5,0 aufweist.

Die erfindungsgemäße Beschichtung zeigt einen einschichtigen Aufbau, wobei entweder eine mehr oder weniger homogene Beschichtung oder eine Beschichtung ausgebildet wird bzw. vorliegen kann, bei der die Partikel sich nahe der metallischen Oberfläche etwas stärker anreichern.

Unter den zu beschichtenden Substrate mit metallischer Oberfläche werden erfindungsgemäß verstanden: Metalle, metallisch beschichtete Oberflächen oder mit Primern vorbehandelte Metalloberflächen, aus denen Metallkationen noch herausgelöst werden können. Insbesondere umfasst der Begriff "zu beschichtende Oberfläche(n)" im Sinne dieser Anmeldung Oberflächen von metallischen Gegenständen und/oder metallischen Partikeln, die gegebenenfalls z.B. mit einer metallischen Beschichtung wie z.B. auf Basis von Zink oder Zinklegierung und/oder mit mindestens einer Beschichtung einer Vorbehandlungs- oder Behandlungszusammensetzung wie z.B. auf Basis von Chromat, Cr³⁺, Ti-Verbindung, Zr-Verbindung, Silan/Silanol/Siloxan/Polysiloxan und/oder organisches Polymer vorbeschichtet sein können.

Unter den metallischen Werkstoffen sind grundsätzlich alle Arten von metallischen Werkstoffen möglich, insbesondere solche aus Aluminium, Eisen, Kupfer, Titan, Zink, Magnesium, Zinn und/oder Legierungen mit einem Gehalt an Aluminium, Eisen, Kalzium, Kupfer, Magnesium, Nickel, Chrom, Molybdän, Titan, Zink und/oder Zinn, wobei deren Einsatz auch benachbart und/oder nacheinander erfolgen kann. Die Werkstoffoberflächen können gegebenenfalls auch vorbeschichtet werden und/oder sein, beispielsweise mit Zink oder einer Aluminium und/oder Zink enthaltenden Legierung.

Als zu beschichtende Gegenstände können grundsätzlich alle Arten von Gegenständen eingesetzt werden, die aus einem metallischen Werkstoff bestehen oder mit mindestens einer metallischen Beschichtung versehen sind, insbesondere metallisch beschichtete polymere oder faserverstärkte, polymere Werkstoffe. Besonders bevorzugte Gegenstände sind insbesondere Bänder (Coils), Bleche, Teile wie z.B. Kleinteile, gefügte Komponenten, kompliziert geformte Komponenten, Profile, Stäbe und/oder Drähte.

Der Begriff "stromloses Beschichten" im Sinne dieser Anmeldung bedeutet, dass beim Beschichten mit der Lösung und/oder Dispersion (= Suspension und/oder Emulsion) enthaltenden Zusammensetzung im Gegensatz zu den bekannten elektrolytischen Verfahren zur Herstellung der Folgebeschichtung von außen eine elektrische Spannung kleiner 100 V angelegt wird.

In dem erfindungsgemäßen Verfahren ist der mindestens eine anionische Polyelektrolyt ausgewählt aus Polysacchariden auf Basis von Alginaten, Pektinen und Gellan Gum.

Vorzugsweise ist das erfindungsgemäße Verfahren eines, bei dem die wässerige Zusammensetzung und/oder die hieraus hergestellte organische Beschichtung mindestens eine Art von Kationen enthält, ausgewählt aus solchen auf Basis von kationisch wirkenden Salzen ausgewählt aus der Gruppe bestehend aus Melaminsalzen, Nitrososalzen, Oxoniumsalzen, Ammoniumsalzen, Salzen mit quaternären Stickstoffkationen, Salzen von Ammoniumderivaten und Metallsalzen von Al, B, Ba, Ca, Cr, Co, Cu, Fe, Hf, In, K, Li, Mg, Mn, Mo, Na, Nb, Ni, Pb, Sn, Ta, Ti, V, W, Zn und/oder Zr.

Der Begriff "Copolymere" im Sinne dieser Anmeldung beschreibt Polymere, die aus zwei oder mehr verschiedenartigen Monomereinheiten zusammengesetzt sind. Hierbei können Copolymere in fünf Klassen unterteilt werden, wie anhand eines binären Copolymers, das aus zwei verschiedenen Comonomeren A und B aufgebaut ist, veranschaulicht wird:
1. Statistische Copolymere, in denen die Verteilung der beiden Monomeren in der Kette zufällig ist (AABABBBABAABBBABBABAB....);
2. Gradient-Copolymere, prinzipiell den statistischen Copolymeren ähnlich, jedoch mit veränderlichem Anteil eines Monomers im Verlauf der Kette (AAAAAABAABBAABABBBAABBBBBB);
3. Alternierende oder abwechselnde Copolymere mit einer regelmäßigen Anordnung der Monomeren entlang der Kette (ABABABABABABABABABAB....);
4. Blockcopolymere, die aus längeren Sequenzen oder Blöcken jedes Monomers besteht (AAAAAAAAABBBBBBBBBBBB...), wobei je nach Anzahl der Blöcke man auch von Diblock-, Triblock-, Multiblock-Copolymeren spricht;
5. Pfropfcopolymere, bei denen Blöcke eines Monomers auf das Gerüst (Rückgrat) eines anderen Monomers aufgepfropft sind.

Der Begriff "Derivate" im Sinne dieser Anmeldung bezeichnet einen abgeleiteten Stoff ähnlicher Struktur zu einer entsprechenden Grundsubstanz. Derivate sind Stoffe, deren Moleküle an Stelle eines H-Atoms oder einer funktionellen Gruppe ein anderes Atom oder eine andere Atomgruppe besitzen bzw. bei denen ein oder mehrere Atome/Atomgruppen entfernt wurden.

Der Begriff "Polymer(e)" im Sinne dieser Anmeldung bedeutet Monomer(e), Oligomer(e), Polymer(e), Copolymer(e), Blockcopolymer(e), Pfropfcopolymer(e), deren Gemische und deren Compoundierungen auf organischer und/oder im Wesentlichen organischer Basis. Üblicherweise liegt/liegen die "Polymer(e)" im Sinne dieser Anmeldung vorwiegend oder gänzlich als Polymer(e) und/oder Copolymer(e) vor.

Das erfindungsgemäße Verfahren ist eines, bei dem die wässerige Zusammensetzung und/oder die hieraus hergestellte organische Beschichtung einen Gehalt an organischen Partikeln auf Basis von Polyacrylaten, Polyurethanen, Polyepoxiden und/oder deren Hybriden aufweist.

Sogenannte Polyacrylat-Polyurethan Hybridharze können vom Typ unterschieden werden in Hybridsysteme, die durch reines Vermischen der verschiedenen Dispersionen erzeugt werden (Blends oder Formulierungen), in solche, die eine chemische Verbindung zwischen den unterschiedlichen Polymerarten aufweisen und in solche, in denen die unterschiedlichen Polymerklassen interpenetrierende Netzwerke (IPN) ausbilden.

Üblicherweise werden solche Polyurethan-Polyacrylat-Hybriddispersionen durch Emulsionspolymerisation eines Vinylpolymerisats ("Polyacrylat") in einer wässrigen Polyurethandispersion hergestellt. Es ist aber auch möglich, die Polyurethan-Polyacrylat-Hybriddispersion als Sekundärdispersion herzustellen.

Wässrige Polyacrylat-Polyepoxid Hybriddispersionen werden üblicherweise durch Additionsreaktionen eines bifunktionellen Epoxids mit bifunktionellen Aminmonomerbausteinen und anschließender Reaktion mit einem Polyacrylat mit ausreichenden Carboxylfunktionen hergestellt. Die Wasserdispergierbarkeit kann wie bei den Polyurethansekundärdispersionen dabei z.B. durch Carboxylatgruppen, die mit Aminen in anionische Gruppen überführt wurden und anschließender Dispergierung in Wasser erzielt werden.

Hybriddispersionen zur Ausbildung einer Schicht auf dem Substrat können neben Polyurethan- und Polyepoxid-Bestandteilen bevorzugt auch organische Polymere und/oder Copolymere auf Basis von Polyvinylalkoholen, Polyvinylacetaten Polybutylacrylaten und/oder anderen Acrylsäureester enthalten. Acrylsäureester sind Ester, die sich von der Acrylsäure (CH₂=CH-COOH) ableiten und damit die funktionelle Gruppe (CH₂=CH-COOR) tragen. In großen Mengen werden unter anderem Acrylsäuremethylester, Acrylsäureethylester, Acrylsäurebutylester und Ethylhexylacrylat produziert. Die Hauptanwendung von Acrylsäureestern liegt in Homo- und Copolymeren, die z. B. Acrylsäure, Acrylamiden, Methacrylaten, Acrylnitril, Fumarsäuren, Itaconsäure, Maleaten, Vinylacetat, Vinlychlorid, Styrol, Butadien und ungesättigten Polyestern, Polyepoxidestern, Polyacrylamiden, Polyacrylsäuren, Polycarbonaten, Polyestern, Polyethern, Polystyrolbutadienen, Poly(meth)acrylsäureestern, Polyvinylacetatcopolymeren mit Acrylsäureestern und/oder Copolymeren mit Dibutylmaleinat und/oder mit Vinylestern von mindestens einer Koch-Säure, Polyethylenen, Polyvinylchloriden, Polyacrylnitrilen, Polyepoxiden, Polyurethanen, Polyacrylaten, Polymethacrylaten, Polyestern, Polyamiden, Polytetrafluorethylenen, Polyisobutadienen, Polyisoprenen, Silikonen, Silikonkautschuken und/oder deren Derivaten enthalten. Diese sind insbesondere zu mindestens 50 Gew.-% der Fest- und Wirkstoffe in der wässerigen Zusammensetzung enthalten.

Der Begriff "Vorbehandlung" bedeutet eine Behandlung (= Kontaktieren der zu beschichtenden Oberflächen mit einer üblicherweise flüssigen Zusammensetzung), bei der anschließend, gegebenenfalls nach einem nachfolgenden Beschichten, eine weitere Beschichtung zum Schützen der Schichtabfolge und des Gegenstandes wie z.B. mindestens ein Lack aufgebracht wird.

Bei einer vorherigen Vorbehandlung vor einer Aktivierung einer Oberfläche mit einem Aktivierungsmittel, das helfen soll, die Oberfläche elektrostatisch aufzuladen, können die zu behandelnden Oberflächen bei Bedarf zuerst alkalisch gereinigt und gegebenenfalls mit einer Zusammensetzung zur Vorbehandlung kontaktiert werden, letzteres insbesondere um eine Konversionsschicht auszubilden. Dann können die derart behandelten und/oder beschichteten Oberflächen gegebenenfalls mit einem Primer und/oder mit einer gegebenenfalls umformbaren Schutzschicht, insbesondere mit einem Korrosionsschutzprimer, beschichtet und/oder gegebenenfalls beölt werden. Die Beölung dient insbesondere dem vorübergehenden Schutz der behandelten und/oder beschichteten insbesondere metallischen Oberflächen.

Als Vorbehandlung ist grundsätzlich jede Art der Vorbehandlung möglich: Es können beispielsweise wässerige Vorbehandlungszusammensetzungen auf Basis von Phosphat, Phosphonat, Silan/Silanol/Siloxan/Polysiloxan, Lanthanidverbindung, Titanverbindung, Hafniumverbindung, Zirkoniumverbindung Säure, Metallsalz und/oder organischem Polymer eingesetzt werden.

Bei der weiteren Behandlung dieser beschichteten Substrate kann bei Bedarf unabhängig davon, ob davor Öl aufgebracht worden ist oder nicht, eine insbesondere alkalische Reinigung erfolgen.

Eine Beschichtung mit einem Korrosionsschutzprimer wie z.B. einem Schweißprimer kann zusätzlichen Korrosionsschutz insbesondere in Hohlräumen und schlecht zugänglichen Partien eines Substrats, Umformbarkeit und/oder Fügbarkeit z.B. beim Falzen, Kleben und/oder Schweißen ermöglichen. In der industriellen Praxis könnte ein Korrosionsschutzprimer insbesondere dann eingesetzt werden, wenn das damit beschichtete Substrat wie z.B. ein Blech nach der Beschichtung mit dem Korrosionsschutzprimer geformt und/oder mit einer weiteren Komponente gefügt wird und wenn weitere Beschichtungen erst danach aufgebracht werden. Wenn in diesem Verfahrensgang zusätzlich ein Korrosionsschutzprimer unter der Aktivierungsschicht und unter der Partikelbeschichtung aufgebracht wird, wird üblicherweise ein deutlich verbesserter Korrosionsschutz erzeugt.

Der Begriff "im Wesentlichen spülfest" im Sinne dieser Anmeldung bedeutet, dass unter den Bedingungen der jeweiligen Anlage und Verfahrensabfolge die jeweils letzte Beschichtung durch einen Spülvorgang (= Spülen) nicht gänzlich entfernt wird, so dass eine Beschichtung hergestellt werden kann, vorzugsweise eine geschlossene Beschichtung.

Bei dem erfindungsgemäßen Verfahren sind die organischen Partikeln aus Polyacrylaten, Polyurethanen, Polyepoxiden und/oder deren Hybriden ausgewählt.

Als Zusätze zu den organischen Polymeren der Partikel empfehlen sich in vielen Ausführungsformen Pigmente und/oder Additive, wie sie in Lacken und/oder Primern häufig verwendet werden.

Eine Filmbildung lässt sich durch den Einsatz thermoplastischer Polymere und/oder durch Zusatz von Substanzen, die als temporäre Weichmacher dienen, verbessern. Filmbildungshilfsmittel wirken als spezifische Lösemittel, die die Oberfläche der Polymerteilchen erweichen und so deren Verschmelzung ermöglichen. Hierbei ist vorteilhaft, wenn diese Weichmacher einerseits ausreichend lange in der wässerigen Zusammensetzung bleiben, um sich auf die Polymerteilchen lange auswirken zu können, und danach verdampfen und somit aus dem Film entweichen. Ferner ist es vorteilhaft, wenn auch ausreichend lange während des Trockenprozesses ein Restwassergehalt vorhanden ist.

Insbesondere vorteilhaft als Filmbildungshilfsmittel sind sogenannte langkettige Alkohole, insbesondere solche mit 4 bis 20 C-Atomen, wie
ein Butandiol,
ein Butylglykol,
ein Butyldiglykol,
ein Ethylenglykolether wie
Ethylenglykolmonobutylether,
Ethylenglykolmonoethylether,
Ethylenglykolmonomethylether,
Ethylglykolpropylether,
Ethylenglykolhexylether,
Diethylenglykolmethy-lether,
Diethylenglykolethylether,
Diethylenglykolbutylether,
Diethylenglykolhexylether oder ein
Polypropylenglykolether wie
Propylenglykolmonomethylether,
Dipropylenglykolmonomethylether,
Tripropylenglykolmonomethylether,
Propylenglykolmonobutylether,
Dipropylenglykolmonobutylether,
Tripropylenglykolmonobutylether,
Propylenglykolmonopropylether,
Dipropylenglykolmonopropylether,
Tripropylenglykolmonopropylether,
Propylenglykolphenylether,
Trimethylpentandioldiisobutyrat,
ein Polytetrahydrofuran,
ein Polyetherpolyol und/oder ein Polyesterpolyol.

Eine Vernetzung kann beispielsweise mit bestimmten reaktiven Gruppen wie z.B. Isocyanat-, Isocyanurat- und/oder Melamingruppen erfolgen.

Vorzugsweise wird die Folgebeschichtung in einer Weise getrocknet, dass vorhandene organische Polymerpartikel verfilmen können, so dass eine weitgehend oder vollständig homogene Beschichtung gebildet wird. Die Trockentemperaturen können dabei in manchen Ausführungsformen so hoch gewählt werden, dass die organischen polymeren Bestandteile vernetzen können.

Bei dem erfindungsgemäßen Verfahren ist es in etlichen Ausführungsformen bevorzugt, dass eine organische Partikel enthaltende Partikelschicht ausgebildet und beispielsweise beim Trocknen verfilmt und/oder vernetzt wird. Das Verfilmen erfolgt in manchen Ausführungsformen auch ohne Anwesenheit von Filmbildungshilfsmitteln. Hierbei können die Partikel der Beschichtung, vorzugsweise zu einem im Wesentlichen geschlossenen oder zu einer geschlossenen Beschichtung verfilmt werden, insbesondere beim Trocknen. Hierbei ist es oft bevorzugt, dass die Trocknungstemperatur einer Beschichtung, die aus organischen Polymeren bestehen, so gewählt wird dass eine im Wesentlichen geschlossene oder eine geschlossene Beschichtung gebildet wird. Bei Bedarf kann zum Verfilmen mindestens ein Filmbildungshilfsmittel zugesetzt werden, insbesondere auf Basis von mindestens einem langkettigen Alkohol. Bei Ausführungsformen mit mehreren Partikelschichten übereinander werden vorzugsweise erst alle Partikelschichten aufgebracht und danach gemeinsam verfilmt und/oder vernetzt.

Der Gehalt an mindestens einem Filmbildungshilfsmittel kann in der wässerigen Zusammensetzung - insbesondere im Bad - 0,01 bis 50 g/L bezogen auf Feststoffe einschließlich Wirkstoffen, bevorzugt 0,08 bis 35 g/L, besonders bevorzugt 0,2 bis 25 g/L betragen. Das Gewichtsverhältnis der Gehalte an organischem Filmbildner zu Gehalten an Filmbildungshilfsmitteln in der wässerigen Zusammensetzung.

Hierbei ist es vielfach bevorzugt, dass das Trocknen, Verfilmen und/oder Vernetzen im Temperaturbereich von 5 bis 350 °C, vorzugsweise 80 bis 200 °C, besonders bevorzugt im Temperaturbereich von 150 bis 190°C bezogen auf die Ofentemperatur und/oder bezogen auf Peak-Metal-Temperature (PMT) erfolgt. Der gewählte Temperaturbereich ist weitgehend von der Art und Menge der organischen und gegebenenfalls auch der anorganischen Bestandteile und gegebenenfalls auch von ihren Filmbildungstemperaturen und/oder Vernetzungstemperaturen abhängig.

Vorzugsweise betrifft die Erfindung ein Verfahren, bei dem die wässerige Zusammensetzung und/oder die hieraus hergestellte organische Beschichtung einen Gehalt an mindestens einem Komplexbildner für Metallkationen oder einem Polymer, welches Metallkationen komplexierend modifiziert ist, aufweist.

Besonders bevorzugt ist das erfindungsgemäße Verfahren eines, bei dem die wässerige Zusammensetzung und/oder die hieraus hergestellte organische Beschichtung einen Gehalt an mindestens einem Komplexbildner ausgewählt aus solchen auf Basis von Maleinsäure, Alendronsäure, Itaconsäure, Citraconsäure oder Mesaconsäure oder die Anhydride oder Halbester dieser Carbonsäuren aufweist.

Vorteilhafter Weise weist die wässerige Zusammensetzung und/oder die hieraus hergestellte organische Beschichtung einen Gehalt an mindestens einem Emulgator auf.

Besonders bevorzugt ist, dass die wässerige Zusammensetzung und/oder die hieraus hergestellte organische Beschichtung einen Gehalt an mindestens einem Emulgator ausgewählt aus solchen auf Basis von anionischen Emulgatoren aufweist. Vorzugsweise enthält die wässerige Zusammensetzung und/oder die hieraus hergestellte organische Beschichtung ein Gemisch aus mindestens zwei verschiedenen anionischen Polyelektrolyten.

Besonders bevorzugt enthält die wässerige Zusammensetzung und/oder die hieraus hergestellte organische Beschichtung ein Gemisch aus zwei Pektinen.

Weiterhin bevorzugt enthält die wässerige Zusammensetzung und/oder die hieraus hergestellte organische Beschichtung mindestens ein anionisches Polysaccharid ausgewählt aus solchen mit einem Veresterungsgrad der Carboxyfunktion im Bereich von 5 bis 75 % bezogen auf die Gesamtzahl der Alkohol- und Carboxygruppen. Ganz besonders bevorzugt enthält die wässerige Zusammensetzung und/oder die hieraus hergestellte organische Beschichtung mindestens ein anionisches Polysaccharid ausgewählt aus solchen, mit einem Molekulargewicht im Bereich von 500 bis 1.000.000 g/mol⁻¹.

Vorzugsweise enthält die wässerige Zusammensetzung und/oder die hieraus hergestellte organische Beschichtung mindestens ein anionisches Polysaccharid ausgewählt aus solchen mit einem Amidierungsgrad der Carboxyfunktionen im Bereich von 1 bis 50 %, einem Epoxidierungsgrad der Carboxyfunktionen von bis zu 80 %.

Besonders bevorzugt ist in dem erfindungsgemäßen Verfahren, dass die anionischen Polyelektrolyte modifiziert werden oder modifiziert sind mit Haftung vermittelnden Haftgruppen ausgewählt aus der Gruppe bestehend aus chemischen Gruppen von multifunktionalen Epoxiden, Isocyanaten, primären Aminen, sekundären Aminen, tertiären Aminen, quartären Aminen, Amiden, Imiden, Imidazolen, Formamiden, Michael-Reaktionsprodukten, Carbodiimiden, Carbenen, cyclischen Carbenen, Cyclocarbonaten, multifunktionalen Carbonsäuren, Aminosäuren, Nukleinsäuren, Methacrylamiden, Polyacrylsäuren, Polyacrylsäurederivaten, Polyvinylalkoholen, Polyphenolen, Polyolen mit mindestens einem Alkyl- und/oder Arylrest, Caprolactam, Phosphorsäuren, Phosphorsäureestern, Epoxidestern, Sulfonsäuren, Sulfonsäureestern, Vinylsulfonsäuren, Vinylphosphonsäuren, Katechol, Silanen sowie den hieraus gebildeten Silanolen und/oder Siloxanen, Triazinen, Thiazolen, Thiazinen, Dithiazinen, Acetalen, Halbacetalen, Chinonen, gesättigten Fettsäuren, ungesättigten Fettsäuren, Alkyden, Estern, Polyestern, Ethern, Glykolen, cyclischen Ethern, Kronenethern, Anhydriden, sowie von Acetylacetonen und von beta-Diketo-Gruppen, Carbonylgruppen und Hydroxy-Gruppen.

Vorteilhafter Weise werden als Kationen, die aus der metallischen Oberfläche herausgelöst werden/sind und/oder die der wässerigen Zusammensetzung zugesetzt werden/sind, Al, Cu, Fe, Mg, Ca und/oder Zn ausgewählt.

Besonders bevorzugt enthält die wässerige Zusammensetzung und/oder die hieraus hergestellte organische Beschichtung mindestens ein Additiv ausgewählt aus Additiven bestehend aus der Gruppe von Bioziden, Dispergierhilfsmitteln, Filmbildungshilfmitteln, saure und/oder basische Hilfsmittel zum Einstellen des pH-Werts, Verdicker und Verlaufsmittel.

Ganz besonders bevorzugt werden vor dem Kontaktieren und Beschichten der metallischen Oberflächen mit einer wässerigen Zusammensetzung in Verfahrensstufe II. die metallischen Oberflächen gereinigt, gebeizt und/oder vorbehandelt.

Vorteilhafter Weise bildet die wässerige Zusammensetzung eine Beschichtung auf Basis eines ionogenen Gels aus, bei dem der dabei oder später ausgebildete Trockenfilm eine Dicke von mindestens 1 µm aufweist.

Besonders bevorzugt wird die organische Beschichtung in 0,05 bis 20 Minuten im Tauchbad ausgebildet und weist nach dem Trocknen eine Trockenfilmdicke im Bereich von 5 bis 100 µm auf.

Die Erfindung betrifft weiterhin eine wässerige Zusammensetzung, die in einer Dispersion aus filmbildenden Polymeren mit einem Feststoffgehalt von 2 bis 40 Gew.-% und einer mittleren Partikelgröße von 10 bis 1000 nm mindestens einen anionischen Polyelektrolyten in einer Menge von 0,01 bis 5,0 Gew.-% bezogen auf die gesamte Masse des resultierenden Gemisches enthält, wobei die wässerige Zusammensetzung einen pH-Wert im Bereich von 0,5 bis 7,0 aufweist, wobei der mindestens eine anionische Polyelektrolyt ausgewählt ist aus Polysacchariden auf Basis von Alginaten, Pektinen und Gellan Gum und wobei die wässerige Zusammensetzung in der Dispersion aus filmbildenden Polymeren einen Gehalt an organischen Partikeln auf Basis von Polyacrylaten, Polyurethanen, Polyepoxiden und/oder deren Hybriden aufweist.

Vorzugsweise ist die wässrige Zusammensetzung eine, die in der Dispersion aus filmbildenden Polymeren einen Gehalt an organischen Partikeln auf Basis von Polyacrylaten, Polyurethanen, Polyepoxiden und/oder deren Hybriden, einen Gehalt an mindestens einem Komplexbildner ausgewählt aus solchen auf Basis von Maleinsäure, Alendronsäure, Itaconsäure, Citraconsäure oder Mesaconsäure oder Anhydriden oder Halbestern dieser Carbonsäuren und mindestens einen anionischen Polyelektrolyten auf Basis von Pektinen oder Gellan Gum aufweist.

Es hat sich gezeigt, dass aus den erfindungsgemäß beschichteten Oberflächen anschließend im Wesentlichen geschlossene oder geschlossene Beschichtungen mit einer Schichtdicke im Bereich von 5 nm bis 50 µm hergestellt werden können, insbesondere im Bereich von 10 nm bis 40 µm, vorzugsweise von 15 nm bis 1 µm. Entsprechende Schichtdicken können die einzelnen Beschichtungen vor und/oder nach ihrer Verfilmung und/oder vor ihrer Vernetzung aufweisen.

Es hat sich gezeigt, dass die erfindungsgemäß beschichteten Oberflächen, aus denen anschließend im Wesentlichen geschlossene oder geschlossene Beschichtungen hergestellt wurden, auf deutlich einfachere und deutlich kostengünstigere Weise hergestellt werden konnten als beispielsweise Elektrotauchlack-, autophoretischen Tauchlack- oder Pulverlackbeschichtungen.

Ferner hat es sich gezeigt, dass derartige erfindungsgemäß hergestellte Beschichtungen Elektrotauchlack-, autophoretischen Tauchlack- oder Pulverlackbeschichtungen der heutigen industriellen Praxis in ihren Eigenschaften gleichwertig sein können.

Es wurde überraschend festgestellt, dass das erfindungsgemäße Verfahren, das kein oder im Wesentlichen kein elektrolytisches Verfahren ist, auch in dem Fall, dass es mit elektrischer Spannung geringfügig unterstützt wird, und es daher üblicherweise kein Anlegen einer äußeren elektrischen Spannung bedarf, in einfacher Weise und ohne aufwendige Steuerung betrieben werden kann. Dieses Verfahren kann in einem weiten Temperaturbereich und auch bei Raumtemperatur eingesetzt werden, wenn von der nachfolgenden Trocknung abgesehen wird.

Es wurde überraschend festgestellt, dass bei dem erfindungsgemäßen Verfahren bezüglich der Aufbringung des Aktivierungsmittels keine aufwendigen Steuerungsmaßnahmen erforderlich sind, um eine gleichmäßige und homogene Beschichtung zu erzielen, und dass bei geringem Chemikalienverbrauch hochwertige schützende Folgebeschichtungen gebildet werden, die eine Dicke im Bereich von 500 nm bis 30 µm erreichen.

Es wurde überraschend festgestellt, dass es sich bei dem erfindungsgemäßen Verfahren bezüglich der Abscheidung insbesondere der Folgebeschichtung um ein selbstregulierendes Verfahren handelt, bei dem keine aufwendigen Steuermaßnahmen erforderlich sind und bei geringem Chemikalienverbrauch hochwertige schützende Beschichtungen gebildet werden.

Es wurde überraschend festgestellt, dass die erfindungsgemäß abgeschiedenen Folgebeschichtungen eine homogene Schicht mit einer gleichmäßigen Trockenschichtdicke auf einem komplex geformten Werkstück ausbildeten, vergleichbar mit der Qualität einer herkömmlich elektrophoretisch oder autophoretisch abgeschiedenen Lackschicht.

Die erfindungsgemäße Beschichtung kann vorzugsweise eingesetzt werden für beschichteten Substrate als Draht, Drahtgeflecht, Band, Blech, Profil, Verkleidung, Teil eines Fahrzeugs oder Flugkörpers, Element für ein Haushaltsgerät, Element im Bauwesen, Gestell, Leitplanken-, Heizkörper- oder Zaunelement, Formteil komplizierter Geometrie oder Kleinteil wie z.B. Schraube, Mutter, Flansch oder Feder. Besonders bevorzugt wird sie im Automobilbau, im Bauwesen, für den Gerätebau, für Haushaltsgeräte oder im Heizungsbau eingesetzt. Die Verwendung des erfindungsgemäßen Verfahrens ist besonders bevorzugt zur Beschichtung von Substraten, die Probleme bei der Beschichtung mit einem Elektrotauchlack bereitet haben.

Die Erfindung wird nachfolgen an Hand von Ausführungsbeispielen und Vergleichsbeispielen näher erläutert. Dabei wurden als Substrate in Schritt I eingesetzt:
1: Elektrolytisch verzinktes Stahlblech mit einer Zink-Schichtauflage von 5µm, Blechdicke 0,81 mm;
2: Kaltgewalzter Stahl, Blechdicke ca. 0,8 mm:
3: Aluminiumlegierung der Güteklasse AC 170, Blechdicke ca. 1,0 mm und folgende generellen Behandlungsschritte durchgeführt:
   II. Alkalische Reinigung:
      industriellen alkalischen Reiniger z.B. 30 g/L Gardoclean® S 5176 und 4 g/L Gardobond® Additiv H 7406 der Chemetall GmbH in Wasser vorzugsweise in Leitungs oder Trinkwasserqualität angesetzt. Die Bleche wurden 180 s im Spritzen bei 60 °C gereinigt und anschließend 120 s mit Stadtwasser und 120 s mit deionisiertem Wasser im Tauchen gespült.
   III. Beschichtung der Oberflächen mit erfindungsgemäßen Dispersionen für die Ausbildung der organischen Beschichtung:

### Zusammensetzung der Dispersion A

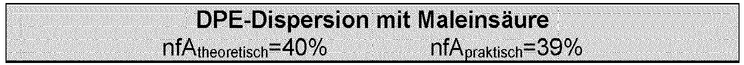

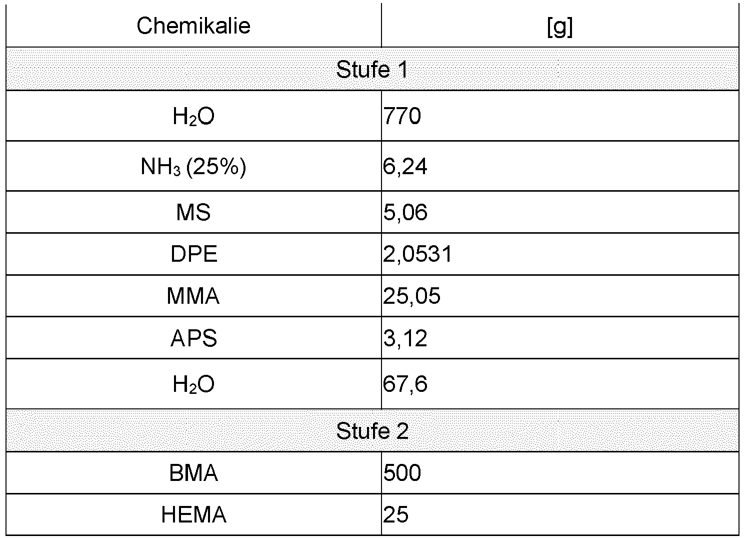

### Abkürzungsverzeichnis:

- NH₃: Ammoniaklösung (25%)
- AS:: Acrylsäure
- DPE:: Diphenylethylen
- MMA:: Methylmethacrylat
- APS:: Ammoniumperoxodisulfat
- BMA:: Butylmethacrylat
- HEMA:: Hydroxyethylmethacrylat
- MS:: Maleinsäure
- VTES:: Vinyltriethoxysilan
- nfA:: nichtflüchtiger Anteil (entspricht Festkörpergehalt)

### Dispersion B

Anionisch stabilisierte Dispersion mit einer Filmbildungstemperatur von 25 °C, einem Festkörpergehalt von 49-51 Gew.-% einem pH von 7,0-8,0, einer Viskosität von 20 - 200 mPas, einer Dichte von 1,04 g/cm³ einer Partikelgrösse von ca. 160 nm und -14 bis -18 mV. Die Dispersion wird für den weiteren Behandlungsgang mit vollentsalztem Wasser auf einen Festkörpergehalt von 10 Gew.-% eingestellt.

Es wurde für die Vergleichsbeispiele 1 bis 3 ausschließlich die Dispersion A ohne Zugabe der für den erfindungsgemäßen Gebrauch in Frage kommenden Polyelektrolyte verwendet. Die Mischung wurde falls notwendig vor Benutzung mit Säure, vorzugsweise Salpeter- und/oder Phosphorsäure auf einen pH von 4 eingestellt. Für die Vergleichsbeispiele 4 bis 6 wurden ausschließlich die für den erfindungsgemäßen Gebrauch in Frage kommenden Polyelektrolyte verwendet.

IV: Spülen der organischen Beschichtung:
Das Spülen nach der organischen Beschichtung dient dazu, um nicht haftende Bestandteile der Formulierung und Anhäufungen der Formulierung zu entfernen und den Verfahrensgang wie in der Automobilindustrie üblich so realitätsnah wie möglich zu gestalten. Denn in der Automobilindustrie erfolgt das Spülen mit Wasser üblicherweise entweder durch ein Tauchspülen oder ein Spritzspülen.

V: Trocknen und/oder Vernetzen der Beschichtung:
Trocknung oder Trocknung unter Verfilmung insbesondere der organischen polymeren Bestandteile: 175 °C für 15 Minuten. Parallele Untersuchungen mit Wirbelstrom-Messgerät und Rasterelektronenmikroskopie (REM) verdeutlichten, dass erfindungsgemäß Beschichtungen ausgebildet wurden, aus denen weitgehend geschlossene oder geschlossene Beschichtungen durch Kontaktieren der Oberflächen mit Dispersionen und/oder Formulierungen gebildet werden konnten.

### Beispiel 1

Substrat 1 wurde mit einer Mischung 0,25 Gew.-% bezogen auf die gesamte Menge des resultierenden Gemisches mit einem Pektin mit einem Molekulargewicht von ungefähr 70.000 g/mol, einem Amidierungsgrad von 0 %, einem Veresterungsgrad von 52 %, einem Epoxydierungsgrad von 0 %, einem Galakturonsäuregehalt von 87 % und 0,25 Gew.-% bezogen auf die gesamte Menge des resultierenden Gemisches ein Pektin mit einem Molekulargewicht von ungefähr 70.000 g/mol, einem Amidierungsgrad von 0 %, einem Veresterungsgrad von 10 %, einem Epoxydierungsgrad von 0 %, einem Galakturonsäuregehalt von 85 % mit 99,5 Gew.-% der vorstehend beschriebenen Dispersion A gemischt. Der Mischung wurde 2,0 g/l 20 %iger Hexafluorozirkonsäure zugesetzt. Es wurde eine Trockenfilmdicke von 55 µm bis 65 µm gemessen mit einem Wirbelstrom-Messgerät und REM ermittelt.

### Beispiel 2

Versuch 1 wurde mit Substrat 2 wiederholt und eine Trockenfilmdicke von 15 µm bis 25 µm mit REM ermittelt.

### Beispiel 3

Versuch 1 wurde mit Substrat 3 wiederholt und eine Trockenfilmdicke von 3 µm bis 4 µm mit REM ermittelt.

### Beispiel 4

Substrat 1 wurde mit einer Mischung 0,25 Gew.-% bezogen auf die gesamte Menge des resultierenden Gemisches mit einem Pektin mit einem Molekulargewicht von ungefähr 70.000 g/mol, einem Amidierungsgrad von 0 %, einem Veresterungsgrad von 52 %, einem Epoxydierungsgrad von 0 %, einem Galakturonsäuregehalt von 87 % und 0,25 Gew.-% bezogen auf die gesamte Menge des resultierenden Gemisches ein Pektin mit einem Molekulargewicht von ungefähr 70.000 g/mol, einem Amidierungsgrad von 0 %, einem Veresterungsgrad von 10 %, einem Epoxydierungsgrad von 0 %, einem Galakturonsäuregehalt von 85 % mit 99,5 Gew.-% der vorstehend beschriebenen Dispersion A gemischt. Der Mischung wurde 4,0 g/l 20 %iger Hexafluorozirkonsäure zugesetzt. Es wurde eine Trockenfilmdicke von 63 µm bis 67 µm gemessen mit einem Wirbelstrom-Messgerät und REM ermittelt.

### Beispiel 5

Versuch 4 wurde mit Substrat 2 wiederholt und eine Trockenfilmdicke von 10 µm bis 20 µm mit REM ermittelt.

### Beispiel 6

Versuch 4 wurde mit Substrat 3 wiederholt und eine Trockenfilmdicke von 4 µm bis 5 µm mit REM ermittelt.

### Beispiel 7

Substrat 1 wurde mit einer Mischung 0,25 Gew.-% bezogen auf die gesamte Menge des resultierenden Gemisches mit einem Pektin mit einem Molekulargewicht von ungefähr 70.000 g/mol, einem Amidierungsgrad von 0 %, einem Veresterungsgrad von 52 %, einem Epoxydierungsgrad von 0 %, einem Galakturonsäuregehalt von 87 % und 0,25 Gew.-% bezogen auf die gesamte Menge des resultierenden Gemisches ein Pektin mit einem Molekulargewicht von ungefähr 70.000 g/mol, einem Amidierungsgrad von 0 %, einem Veresterungsgrad von 10 %, einem Epoxydierungsgrad von 0 %, einem Galakturonsäuregehalt von 85 % mit 99,5 Gew.-% der vorstehend beschriebenen Dispersion A gemischt. Der Mischung wurde 6,0 g/l 20 %iger Hexafluorozirkonsäure zugesetzt. Es wurde eine Trockenfilmdicke von 70 µm bis 85 µm gemessen mit einem Wirbelstrom-Messgerät und REM ermittelt.

### Beispiel 8

Versuch 7 wurde mit Substrat 2 wiederholt und eine Trockenfilmdicke von 5 µm bis 7 µm mit REM ermittelt.

### Beispiel 9

Versuch 7 wurde mit Substrat 3 wiederholt und eine Trockenfilmdicke von 5 µm bis 6 µm mit REM ermittelt.

### Beispiel 10

Substrat 2 wurde mit einer Mischung 0,25 Gew.-% bezogen auf die gesamte Menge des resultierenden Gemisches mit einem Pektin mit einem Molekulargewicht von ungefähr 70.000 g/mol, einem Amidierungsgrad von 0 %, einem Veresterungsgrad von 52 %, einem Epoxydierungsgrad von 0 %, einem Galakturonsäuregehalt von 87 % und 0,25 Gew.-% bezogen auf die gesamte Menge des resultierenden Gemisches ein Pektin mit einem Molekulargewicht von ungefähr 70.000 g/mol, einem Amidierungsgrad von 0 %, einem Veresterungsgrad von 10 %, einem Epoxydierungsgrad von 0 %, einem Galakturonsäuregehalt von 85 % mit 99,5 Gew.-% der vorstehend beschriebenen Dispersion A gemischt. Der Mischung wurde 8,0 g/l 20 %iger Hexafluorozirkonsäure zugesetzt. Es wurde eine Trockenfilmdicke von 5 µm bis 10 µm gemessen mit einem Wirbelstrom-Messgerät und REM ermittelt.

### Beispiel 11

Versuch 10 wurde mit Substrat 3 wiederholt und eine Trockenfilmdicke von 7 µm bis 8 µm mit REM ermittelt.

### Beispiel 12

Substrat 3 wurde mit einer Mischung 0,25 Gew.-% bezogen auf die gesamte Menge des resultierenden Gemisches mit einem Pektin mit einem Molekulargewicht von ungefähr 70.000 g/mol, einem Amidierungsgrad von 0 %, einem Veresterungsgrad von 52 %, einem Epoxydierungsgrad von 0 %, einem Galakturonsäuregehalt von 87 % und 0,25 Gew.-% bezogen auf die gesamte Menge des resultierenden Gemisches ein Pektin mit einem Molekulargewicht von ungefähr 70.000 g/mol, einem Amidierungsgrad von 0 %, einem Veresterungsgrad von 10 %, einem Epoxydierungsgrad von 0 %, einem Galakturonsäuregehalt von 85 % mit 99,5 Gew.-% der vorstehend beschriebenen Dispersion A gemischt. Der Mischung wurde 10,0 g/l 20 %iger Hexafluorozirkonsäure zugesetzt. Es wurde eine Trockenfilmdicke von 8 µm bis 9 µm gemessen mit einem Wirbelstrom-Messgerät und REM ermittelt.

### Beispiel 13

Substrat 3 wurde mit einer Mischung 0,25 Gew.-% bezogen auf die gesamte Menge des resultierenden Gemisches mit einem Pektin mit einem Molekulargewicht von ungefähr 70.000 g/mol, einem Amidierungsgrad von 0 %, einem Veresterungsgrad von 52 %, einem Epoxydierungsgrad von 0 %, einem Galakturonsäuregehalt von 87 % und 0,25 Gew.-% bezogen auf die gesamte Menge des resultierenden Gemisches ein Pektin mit einem Molekulargewicht von ungefähr 70.000 g/mol, einem Amidierungsgrad von 0 %, einem Veresterungsgrad von 10 %, einem Epoxydierungsgrad von 0 %, einem Galakturonsäuregehalt von 85 % mit 99,5 Gew.-% der vorstehend beschriebenen Dispersion A gemischt. Der Mischung wurde 14,0 g/l 20 %iger Hexafluorozirkonsäure zugesetzt. Es wurde eine Trockenfilmdicke von 16 µm bis 21 µm gemessen mit einem Wirbelstrom-Messgerät und REM ermittelt.

### Beispiel 14

Substrat 3 wurde mit einer Mischung 0,25 Gew.-% bezogen auf die gesamte Menge des resultierenden Gemisches mit einem Pektin mit einem Molekulargewicht von ungefähr 70.000 g/mol, einem Amidierungsgrad von 0 %, einem Veresterungsgrad von 52 %, einem Epoxydierungsgrad von 0 %, einem Galakturonsäuregehalt von 87 % und 0,25 Gew.-% bezogen auf die gesamte Menge des resultierenden Gemisches ein Pektin mit einem Molekulargewicht von ungefähr 70.000 g/mol, einem Amidierungsgrad von 0 %, einem Veresterungsgrad von 10 %, einem Epoxydierungsgrad von 0 %, einem Galakturonsäuregehalt von 85 % mit 99,5 Gew.-% der vorstehend beschriebenen Dispersion A gemischt. Der Mischung wurde 24,0 g/l 20 %iger Hexafluorozirkonsäure zugesetzt. Es wurde eine Trockenfilmdicke von 20 µm bis 22 µm gemessen mit einem Wirbelstrom-Messgerät und REM ermittelt.

### Beispiel 15

Substrat 3 wurde mit einer Mischung von 0,25 Gew.-% bezogen auf die gesamte Menge des resultierenden Gemisches mit einem Pektin mit einem Molekulargewicht von ungefähr 70.000 g/mol, einem Amidierungsgrad von 0 %, einem Veresterungsgrad von 52 %, einem Epoxydierungsgrad von 0 %, einem Galakturonsäuregehalt von 87 % und 0,25 Gew.-% bezogen auf die gesamte Menge des resultierenden Gemisches ein Pektin mit einem Molekulargewicht von ungefähr 70.000 g/mol, einem Amidierungsgrad von 0 %, einem Veresterungsgrad von 10 %, einem Epoxydierungsgrad von 0 %, einem Galakturonsäuregehalt von 85 % mit 99,5 Gew.-% der vorstehend beschriebenen Dispersion A gemischt. Der Mischung wurde 44,0 g/l 20 %iger Hexafluorozirkonsäure zugesetzt. Es wurde eine Trockenfilmdicke von 24 µm gemessen mit einem Wirbelstrom-Messgerät und REM ermittelt.

### Beispiel 16

Substrat 1 wurde mit 0,25 Gew.-% bezogen auf die gesamte Menge des resultierenden Gemisches ein Pektin mit einem Molekulargewicht von ungefähr 70.000 g/mol, einem Amidierungsgrad von 0 %, einem Veresterungsgrad von 52 %, einem Epoxydierungsgrad von 0 %, einem Galakturonsäuregehalt von 87 % und 0,25 Gew.-% bezogen auf die gesamte Menge des resultierenden Gemisches ein Pektin mit einem Molekulargewicht von ungefähr 70.000 g/mol, einem Amidierungsgrad von 0 %, einem Veresterungsgrad von 10 %, einem Epoxydierungsgrad von 0 %, einem Galakturonsäuregehalt von 85 % mit 99,5 Gew.-% der Dispersion A gemischt. Der Mischung wurde 1,0 g/l 20 %iger Hexafluorotitansäure zugesetzt. Es wurde eine Trockenfilmdicke von 52 µm bis 55 µm gemessen mit einem Wirbelstrom-Messgerät und REM ermittelt.

### Beispiel 17

Versuch 16 wurde mit Substrat 2 wiederholt und eine Trockenfilmdicke von 18 µm bis 24 µm mit REM ermittelt.

### Beispiel 18

Versuch 16 wurde mit Substrat 3 wiederholt und eine Trockenfilmdicke von 6 µm bis 7 µm mit REM ermittelt.

### Beispiel 19

Substrat 1 wurde mit einer Mischung von 0,25 Gew.-% bezogen auf die gesamte Menge des resultierenden Gemisches ein Pektin mit einem Molekulargewicht von ungefähr 70.000 g/mol, einem Amidierungsgrad von 0 %, einem Veresterungsgrad von 52 %, einem Epoxydierungsgrad von 0 %, einem Galakturonsäuregehalt von 87 % und 0,25 Gew.-% bezogen auf die gesamte Menge des resultierenden Gemisches ein Pektin mit einem Molekulargewicht von ungefähr 70.000 g/mol, einem Amidierungsgrad von 0 %, einem Veresterungsgrad von 10 %, einem Epoxydierungsgrad von 0 %, einem Galakturonsäuregehalt von 85 % mit 99,5 Gew.-% der Dispersion A gemischt. Der Mischung wurde 2,0 g/l 20 %iger Hexafluorotitansäure zugesetzt. Es wurde eine Trockenfilmdicke von 60 µm bis 70 µm gemessen mit einem Wirbelstrom-Messgerät und REM ermittelt.

### Beispiel 20

Versuch 19 wurde mit Substrat 2 wiederholt und eine Trockenfilmdicke von 20 µm bis 22 µm mit REM ermittelt.

### Beispiel 21

Versuch 19 wurde mit Substrat 3 wiederholt und eine Trockenfilmdicke von 8 µm bis 9 µm mit REM ermittelt.

### Beispiel 22

Substrat 1 wurde mit einer Mischung von 0,25 Gew.-% bezogen auf die gesamte Menge des resultierenden Gemisches ein Pektin mit einem Molekulargewicht von ungefähr 70.000 g/mol, einem Amidierungsgrad von 0 %, einem Veresterungsgrad von 52 %, einem Epoxydierungsgrad von 0 %, einem Galakturonsäuregehalt von 87 % und 0,25 Gew.-% bezogen auf die gesamte Menge des resultierenden Gemisches ein Pektin mit einem Molekulargewicht von ungefähr 70.000 g/mol, einem Amidierungsgrad von 0 %, einem Veresterungsgrad von 10 %, einem Epoxydierungsgrad von 0 %, einem Galakturonsäuregehalt von 85 % mit 99,5 Gew.-% der Dispersion A gemischt. Der Mischung wurde 4,0 g/l 20 %iger Hexafluorotitansäure zugesetzt. Es wurde eine Trockenfilmdicke von 67 µm bis 73 µm gemessen mit einem Wirbelstrom-Messgerät und REM ermittelt.

### Beispiel 23

Versuch 22 wurde mit Substrat 2 wiederholt und eine Trockenfilmdicke von 6 µm bis 11 µm mit REM ermittelt.

### Beispiel 24

Versuch 22 wurde mit Substrat 3 wiederholt und eine Trockenfilmdicke von 8 µm bis 10 µm mit REM ermittelt.

### Beispiel 25

Substrat 1 wurde mit einer Mischung von 0,25 Gew.-% bezogen auf die gesamte Menge des resultierenden Gemisches ein Pektin mit einem Molekulargewicht von ungefähr 70.000 g/mol, einem Amidierungsgrad von 0 %, einem Veresterungsgrad von 52 %, einem Epoxydierungsgrad von 0 %, einem Galakturonsäuregehalt von 87 % und 0,25 Gew.-% bezogen auf die gesamte Menge des resultierenden Gemisches ein Pektin mit einem Molekulargewicht von ungefähr 70.000 g/mol, einem Amidierungsgrad von 0 %, einem Veresterungsgrad von 10 %, einem Epoxydierungsgrad von 0 %, einem Galakturonsäuregehalt von 85 % mit 99,5 Gew.-% der Dispersion A gemischt. Der Mischung wurde 6,0 g/l 20 %iger Hexafluorotitansäure zugesetzt. Es wurde eine Trockenfilmdicke von 70 µm bis 90 µm gemessen mit einem Wirbelstrom-Messgerät und REM ermittelt.

### Beispiel 26

Versuch 25 wurde mit Substrat 2 wiederholt und eine Trockenfilmdicke von 6 µm bis 12 µm mit REM ermittelt.

### Beispiel 27

Versuch 25 wurde mit Substrat 3 wiederholt und eine Trockenfilmdicke von 7 µm bis 9 µm mit REM ermittelt.

### Beispiel 28

Substrat 3 wurde mit einer Mischung von 0,25 Gew.-% bezogen auf die gesamte Menge des resultierenden Gemisches ein Pektin mit einem Molekulargewicht von ungefähr 70.000 g/mol, einem Amidierungsgrad von 0 %, einem Veresterungsgrad von 52 %, einem Epoxydierungsgrad von 0 %, einem Galakturonsäuregehalt von 87 % und 0,25 Gew.-% bezogen auf die gesamte Menge des resultierenden Gemisches ein Pektin mit einem Molekulargewicht von ungefähr 70.000 g/mol, einem Amidierungsgrad von 0 %, einem Veresterungsgrad von 10 %, einem Epoxydierungsgrad von 0 %, einem Galakturonsäuregehalt von 85 % mit 99,5 Gew.-% obiger Dispersion A gemischt. Der Mischung wurde 8,0 g/l 20 %iger Hexafluorotitansäure zugesetzt. Es wurde eine Trockenfilmdicke von 8 µm bis 11 µm gemessen mit einem Wirbelstrom-Messgerät und REM ermittelt.

### Beispiel 29

Substrat 3 wurde mit einer Mischung von 0,25 Gew.-% bezogen auf die gesamte Menge des resultierenden Gemisches ein Pektin mit einem Molekulargewicht von ungefähr 70'000 g/mol, einem Amidierungsgrad von 0 %, einem Veresterungsgrad von 52 %, einem Epoxydierungsgrad von 0 %, einem Galakturonsäuregehalt von 87 % und 0,25 Gew.-% bezogen auf die gesamte Menge des resultierenden Gemisches ein Pektin mit einem Molekulargewicht von ungefähr 70'000 g/mol, einem Amidierungsgrad von 0 %, einem Veresterungsgrad von 10 %, einem Epoxydierungsgrad von 0 %, einem Galakturonsäuregehalt von 85 % mit 99,5 Gew.-% der Dispersion A gemischt. Der Mischung wurde 10,0 g/l 20 %iger Hexafluorotitansäure zugesetzt. Es wurde eine Trockenfilmdicke von 8 µm bis 12 µm gemessen mit einem Wirbelstrom-Messgerät und REM ermittelt.

### Beispiel 30

Substrat 3 wurde mit einer Mischung von 0,25 Gew.-% bezogen auf die gesamte Menge des resultierenden Gemisches ein Pektin mit einem Molekulargewicht von ungefähr 70.000 g/mol, einem Amidierungsgrad von 0 %, einem Veresterungsgrad von 52 %, einem Epoxydierungsgrad von 0 %, einem Galakturonsäuregehalt von 87 % und 0,25 Gew.-% bezogen auf die gesamte Menge des resultierenden Gemisches ein Pektin mit einem Molekulargewicht von ungefähr 70.000 g/mol, einem Amidierungsgrad von 0 %, einem Veresterungsgrad von 10 %, einem Epoxydierungsgrad von 0 %, einem Galakturonsäuregehalt von 85 % mit 99,5 Gew.-% der Dispersion A gemischt. Der Mischung wurde 14,0 g/l 20 %iger Hexafluorotitansäure zugesetzt. Es wurde eine Trockenfilmdicke von 9 µm bis 11 µm gemessen mit einem Wirbelstrom-Messgerät und REM ermittelt.

### Beispiel 31

Substrat 3 wurde mit einer Mischung von 0,25 Gew.-% bezogen auf die gesamte Menge des resultierenden Gemisches ein Pektin mit einem Molekulargewicht von ungefähr 70.000 g/mol, einem Amidierungsgrad von 0 %, einem Veresterungsgrad von 52 %, einem Epoxydierungsgrad von 0 %, einem Galakturonsäuregehalt von 87 % und 0,25 Gew.-% bezogen auf die gesamte Menge des resultierenden Gemisches ein Pektin mit einem Molekulargewicht von ungefähr 70.000 g/mol, einem Amidierungsgrad von 0 %, einem Veresterungsgrad von 10 %, einem Epoxydierungsgrad von 0 %, einem Galakturonsäuregehalt von 85 % mit 99,5 Gew.-% obiger Dispersion A gemischt. Der Mischung wurde 24,0 g/l 20 %iger Hexafluorotitansäure zugesetzt. Es wurde eine Trockenfilmdicke von 12 µm bis 17 µm gemessen mit einem Wirbelstrom-Messgerät und REM ermittelt.

### Beispiel 32

Substrat 3 wurde mit einer Mischung von 0,25 Gew.-% bezogen auf die gesamte Menge des resultierenden Gemisches ein Pektin mit einem Molekulargewicht von ungefähr 70.000 g/mol, einem Amidierungsgrad von 0 %, einem Veresterungsgrad von 52 %, einem Epoxydierungsgrad von 0 %, einem Galakturonsäuregehalt von 87 % und 0,25 Gew.-% bezogen auf die gesamte Menge des resultierenden Gemisches ein Pektin mit einem Molekulargewicht von ungefähr 70.000 g/mol, einem Amidierungsgrad von 0 %, einem Veresterungsgrad von 10 %, einem Epoxydierungsgrad von 0 %, einem Galakturonsäuregehalt von 85 % mit 99,5 Gew.-% obiger Dispersion A gemischt. Der Mischung wurde 44,0 g/l 20 %iger Hexafluorotitansäure zugesetzt. Es wurde eine Trockenfilmdicke von 16 µm bis 24 µm gemessen mit einem Wirbelstrom-Messgerät und REM ermittelt.

### Beispiel 33 (nicht erfindungsgemäß)

Substrat 1 wurde mit einer Mischung von 0,5 Gew.-% bezogen auf die gesamte Menge des resultierenden Gemisches ein Chitosan mit einem Diacetylierungsgrad zwischen 75 und 85 % in 1%iger Essigsäure gelöst und mit 99,5 Gew.-% der Dispersion A gemischt. Der Mischung wurde 2,8 g/l 20 %iger Hexafluorozirkonsäure zugesetzt. Es wurde eine Trockenfilmdicke von 4 µm bis 6 µm gemessen mit einem Wirbelstrom-Messgerät und REM ermittelt.

### Beispiel 34 (nicht erfindungsgemäß)

Substrat 1 wurde mit einer Mischung von 0,5 Gew.-% bezogen auf die gesamte Menge des resultierenden Gemisches ein Chitosan mit einem Diacetylierungsgrad zwischen 75-85% 1%iger Essigsäure gelöst und mit 99,5 Gew.-% obiger Dispersion B gemischt. Der Mischung wurde 2,4 g/l 20 %iger Hexafluorozirkonsäure zugesetzt. Es wurde eine Trockenfilmdicke von 45 µm bis 50 µm gemessen mit einem Wirbelstrom-Messgerät und REM ermittelt.

### Beispiel 35 (nicht erfindungsgemäß)

Versuch 34 wurde mit Substrat 3 wiederholt und eine Trockenfilmdicke von 3 µm bis 4 µm mit REM ermittelt.

### Beispiel 36

Substrat 1 wurde mit einer Mischung von 0,5 Gew.-% bezogen auf die gesamte Menge des resultierenden Gemisches ein Gellan Gum mit einem Molekulargewicht von ungefähr 70.000 g/mol, einem geringen Acylgehalt mit 99,5 Gew.-% obiger Dispersion A gemischt. Der Mischung wurde 2,0 g/l 20 %iger Hexafluorozirkonsäure zugesetzt. Es wurde eine Trockenfilmdicke von 5 µm bis 6 µm gemessen mit einem Wirbelstrom-Messgerät und REM ermittelt.

### Beispiel 37

Versuch 36 wurde mit Substrat 2 wiederholt und eine Trockenfilmdicke von 7 µm bis 8 µm mit REM ermittelt.

### Beispiel 38

Versuch 36 wurde mit Substrat 3 wiederholt und eine Trockenfilmdicke von 7 µm bis 8 µm mit REM ermittelt

### Vergleichsbeispiel 1

Substrat 1 wurde mit der Dispersion A beschichtet. Es wurde keine Trockenfilmstärke mit REM ermittelt.

### Vergleichsbeispiel 2

Substrat 2 wurde mit der Dispersion A beschichtet. Es wurde keine Trockenfilmstärke mit REM ermittelt.

### Vergleichsbeispiel 3

Substrat 3 wurde mit der Dispersion A beschichtet. Es wurde keine Trockenfilmstärke mit REM ermittelt.

### Vergleichsbeispiel 4

Die Beschichtung von Substrat 1 mit den in der Erfindungsbeschreibung genannten Polyelektrolyten ohne Mischung mit der Dispersion A ergab eine Trockenfilmstärke von 300 nm bis 500 nm.

### Vergleichsbeispiel 5

Die Beschichtung von Substrat 2 mit den in der Erfindungsbeschreibung genannten Polyelektrolyten ohne Mischung mit der Dispersion A ergab eine Trockenfilmstärke von 300 nm bis 500 nm.

### Vergleichsbeispiel 6

Die Beschichtung von Substrat 3 mit den in der Erfindungsbeschreibung genannten Polyelektrolyten ohne Mischung mit der Dispersion A ergab eine Trockenfilmstärke von 300 nm bis 500 nm.

Die mikroskopischen Aufnahmen zeigen durchweg eine homogene Schichtbildung, was auf ein verlässliches, selbst regulierendes und gut kontrollierbares Beschichtungsverfahren hinweist.

## Patentansprüche

1. Verfahren zum Beschichten von metallischen Oberflächen von Substraten umfassend die Schritte oder bestehend aus den Schritten:
I. Bereitstellen eines Substrats mit einer gereinigten, metallischen Oberfläche,
II. Kontaktieren und Beschichten metallischen Oberflächen mit einer wässerigen Zusammensetzung in Form einer Dispersion und/oder Suspension,
III. gegebenenfalls Spülen der organischen Beschichtung und
IV. Trocknen und/oder Einbrennen der organischen Beschichtung oder
V. gegebenenfalls Trocknen der organischen Beschichtung und Beschichten mit einer gleichartigen oder weiteren Beschichtungszusammensetzung vor einem Trocknen und/oder Einbrennen,
**dadurch gekennzeichnet,**
**dass** in Schritt II die Beschichtung mit einer wässerigen Zusammensetzung in Form einer Dispersion und/oder Suspension erfolgt, die ein komplexes Fluorid ausgewählt aus der Gruppe bestehend aus Hexa- oder Tetrafluoriden der Elemente Titan, Zirkon, Hafnium, Silizium, Aluminium und/oder Bor in einer Menge von 1,1 10⁻⁶ mol/l bis 0,30 mol/l bezogen auf die Kationen enthält, wobei einer anionisch stabilisierten Dispersion aus filmbildenden Polymeren mit einem Feststoffgehalt von 2 bis 40 Gew.-% und einer mittleren Partikelgröße von 10 bis 1000 nm, die im pH-Wertbereich von 0,5 bis 7,0 stabil ist, mindestens ein anionischer Polyelektrolyt in einer Menge von 0,01 bis 5,0 Gew.-% bezogen auf die gesamte Masse des resultierenden Gemisches zugesetzt wird, wobei die wässerige Zusammensetzung einen pH-Wert im Bereich von 0,5 bis 7,0 aufweist und eine Beschichtung auf Basis eines ionogenen Gels ausbildet, welches aus der metallischen Oberfläche herausgelöste Kationen bindet und diese Kationen aus einer Vorbehandlungsstufe und/oder aus der Kontaktierung im Schritt II stammen, wobei der mindestens eine anionische Polyelektrolyt ausgewählt ist aus Polysacchariden auf Basis von Alginaten, Pektinen und Gellan Gum, und wobei die wässerige Zusammensetzung in der Dispersion aus filmbildenden Polymeren einen Gehalt an organischen Partikeln auf Basis von Polyacrylaten, Polyurethanen, Polyepoxiden und/oder deren Hybriden aufweist.

2. Verfahren nach Anspruch 1, **dadurch gekennzeichnet, dass** ein komplexes Fluorid in einer Menge von 1,1 10⁻⁴ mol/l bis 0,05 mol/l bezogen auf die Kationen enthalten ist, wobei die wässerige Zusammensetzung einen pH-Wert im Bereich von 1,5 bis 5,0 aufweist.

3. Verfahren nach Anspruch 1 oder 2, **dadurch gekennzeichnet, dass** der anionische Polyelektrolyt mindestens ein Polysaccharid auf Basis von Pektinen oder Gellan Gum enthält oder daraus besteht.

4. Verfahren nach Anspruch 1 oder 2, **dadurch gekennzeichnet, dass** die wässerige Zusammensetzung und/oder die hieraus hergestellte organische Beschichtung ein Gemisch aus mindestens zwei verschiedenen anionischen Polyelektrolyten enthält.

5. Verfahren nach Anspruch 4, **dadurch gekennzeichnet, dass** die wässerige Zusammensetzung und/oder die hieraus hergestellte organische Beschichtung ein Gemisch aus zwei Pektinen enthält.

6. Verfahren nach einem oder mehreren der vorherigen Ansprüche, **dadurch gekennzeichnet, dass** die wässerige Zusammensetzung und/oder die hieraus hergestellte organische Beschichtung mindestens ein anionisches Polysaccharid ausgewählt aus solchen mit einem Veresterungsgrad der Carboxyfunktion im Bereich von 5 bis 75 % bezogen auf die Gesamtzahl der Alkohol- und Carboxygruppen enthält.

7. Verfahren nach einem oder mehreren der vorherigen Ansprüche, **dadurch gekennzeichnet, dass** die wässerige Zusammensetzung und/oder die hieraus hergestellte organische Beschichtung mindestens ein anionisches Polysaccharid ausgewählt aus solchen mit einem Molekulargewicht im Bereich von 500 bis 1.000.000 g/mol⁻¹ enthält.

8. Verfahren nach einem oder mehreren der vorherigen Ansprüche, **dadurch gekennzeichnet, dass** die wässerige Zusammensetzung und/oder die hieraus hergestellte organische Beschichtung mindestens ein anionisches Polysaccharid ausgewählt aus solchen mit einem Amidierungsgrad der Carboxyfunktionen im Bereich von 1 bis 50 % und einem Epoxidierungsgrad der Carboxyfunktionen von bis zu 80 % enthält.

9. Verfahren nach einem oder mehreren der vorherigen Ansprüche, **dadurch gekennzeichnet, dass** die anionischen Polyelektrolyte modifiziert werden oder modifiziert sind mit Haftung vermittelnden Haftgruppen ausgewählt aus der Gruppe bestehend aus chemischen Gruppen von multifunktionalen Epoxiden, Isocyanaten, primären Aminen, sekundären Aminen, tertiären Aminen, quartären Aminen, Amiden, Imiden, Imidazolen, Formamiden, Michael-Reaktionsprodukten, Carbodiimiden, Carbenen, cyclischen Carbenen, Cyclocarbonaten, multifunktionalen Carbonsäuren, Aminosäuren, Nukleinsäuren, Methacrylamiden, Polyacrylsäuren, Polyacrylsäurederivaten, Polyvinylalkoholen, Polyphenolen, Polyolen mit mindestens einem Alkyl- und/oder Arylrest, Caprolactam, Phosphorsäuren, Phosphorsäureestern, Epoxidestern, Sulfonsäuren, Sulfonsäureestern, Vinylsulfonsäuren, Vinylphosphonsäuren, Katechol, Silanen sowie den hieraus gebildeten Silanolen und/oder Siloxanen, Triazinen, Thiazolen, Thiazinen, Dithiazinen, Acetalen, Halbacetalen, Chinonen, gesättigten Fettsäuren, ungesättigten Fettsäuren, Alkyden, Estern, Polyestern, Ethern, Glykolen, cyclischen Ethern, Kronenethern, Anhydriden, sowie von Acetylacetonen und von beta-Diketo-Gruppen, Carbonylgruppen und Hydroxy-Gruppen.

10. Verfahren nach einem oder mehreren der vorherigen Ansprüche, **dadurch gekennzeichnet, dass** die wässerige Zusammensetzung und/oder die hieraus hergestellte organische Beschichtung einen Gehalt an mindestens einem Komplexbildner für Metallkationen oder einem Polymer, welches Metallkationen komplexierend modifiziert ist, aufweist.

11. Verfahren nach Anspruch 10, **dadurch gekennzeichnet, dass** die wässerige Zusammensetzung und/oder die hieraus hergestellte organische Beschichtung einen Gehalt an mindestens einem Komplexbildner ausgewählt aus solchen auf Basis von Maleinsäure, Alendronsäure, Itaconsäure, Citraconsäure oder Mesaconsäure oder die Anhydride oder Halbester dieser Carbonsäuren aufweist.

12. Verfahren nach einem oder mehreren der vorherigen Ansprüche, **dadurch gekennzeichnet, dass** die wässerige Zusammensetzung und/oder die hieraus hergestellte organische Beschichtung mindestens eine Art von Kationen enthält, ausgewählt aus solchen auf Basis von kationisch wirkenden Salzen ausgewählt aus der Gruppe bestehend aus Melaminsalzen, Nitrososalzen, Oxoniumsalzen, Ammoniumsalzen, Salzen mit quaternären Stickstoffkationen, Salzen von Ammoniumderivaten und Metallsalzen von Al, B, Ba, Ca, Cr, Co, Cu, Fe, Hf, In, K, Li, Mg, Mn, Mo, Na, Nb, Ni, Pb, Sn, Ta, Ti, V, W, Zn und/oder Zr.

13. Verfahren nach Anspruch 12, **dadurch gekennzeichnet, dass** als Kationen, die aus der metallischen Oberfläche herausgelöst werden/sind und/oder die der wässerigen Zusammensetzung zugesetzt werden/sind, Al, Cu, Fe, Mg und/oder Zn ausgewählt werden.

14. Wässerige Zusammensetzung, die in einer anionisch stabilisierten Dispersion aus filmbildenden Polymeren mit einem Feststoffgehalt von 2 bis 40 Gew.-% und einer mittleren Partikelgröße von 10 bis 1000 nm, die im pH-Wertbereich von 0,5 bis 7,0 stabil ist, mindestens einen anionischen Polyelektrolyten in einer Menge von 0,01 bis 5,0 Gew.-% bezogen auf die gesamte Masse des resultierenden Gemisches sowie ein komplexes Fluorid ausgewählt aus der Gruppe bestehend aus Hexa- oder Tetrafluoriden der Elemente Titan, Zirkon, Hafnium, Silizium, Aluminium und/oder Bor in einer Menge von 1,1 10⁻⁶ mol/l bis 0,30 mol/l bezogen auf die Kationen enthält, wobei die wässerige Zusammensetzung einen pH-Wert im Bereich von 0,5 bis 7,0 aufweist, wobei der mindestens eine anionische Polyelektrolyt ausgewählt ist aus Polysacchariden auf Basis von Alginaten, Pektinen und Gellan Gum und wobei die wässerige Zusammensetzung in der Dispersion aus filmbildenden Polymeren einen Gehalt an organischen Partikeln auf Basis von Polyacrylaten, Polyurethanen, Polyepoxiden und/oder deren Hybriden aufweist.

15. Wässerige Zusammensetzung nach Anspruch 14, **dadurch gekennzeichnet, dass** die in einer Dispersion aus filmbildenden Polymeren einen Gehalt an organischen Partikeln auf Basis von Polyacrylaten, Polyurethanen, Polyepoxiden und/oder deren Hybriden, einen Gehalt an mindestens einem Komplexbildner ausgewählt aus solchen auf Basis von Maleinsäure, Alendronsäure, Itaconsäure, Citraconsäure oder Mesaconsäure oder Anhydriden oder Halbestern dieser Carbonsäuren und mindestens einen anionischen Polyelektrolyten auf Basis von Pektinen oder Gellan Gum aufweist.

## Claims

1. A method for coating metallic surfaces of substrates, comprising or consisting of the following steps:
I. providing a substrate having a cleaned, metallic surface,
II. contacting and coating metallic surfaces with an aqueous composition in a dispersion and/or suspension form,
III. optionally rinsing the organic coating and
IV. drying and/or baking the organic coating, or
V. optionally drying the organic coating and carrying out coating with a coating composition of the same kind or a further coating composition prior to drying and/or baking,
wherein
the coating in step II takes place with an aqueous composition in a dispersion and/or suspension form which comprises a complex fluoride selected from the group consisting of hexa- or tetrafluorides of the elements titanium, zirconium, hafnium, silicon, aluminum and/or boron in an amount of 1.1 10⁻⁶ mol/l to 0.30 mol/l, based on the cations, where an anionically stabilized dispersion of film-forming polymers with a solids content of 2 to 40 wt% and an average particle size of 10 to 1000 nm, which is stable in the pH range from 0.5 to 7.0, is admixed with at least one anionic polyelectrolyte in an amount of 0.01 to 5.0 wt%, based on the total mass of the resulting mixture, where the aqueous composition has a pH in the range from 0.5 to 7.0 and forms a coating based on an ionogenic gel which binds cations extracted from the metallic surface, these cations originating from a pretreatment stage and/or from the contacting in step II, where the at least one anionic polyelectrolyte is selected from polysaccharides based on alginates, pectins and gellan gum, and where the aqueous composition in the dispersion of film-forming polymers includes organic particles based on polyacrylates, polyurethanes, polyepoxides and/or hybrids thereof.

2. The method according to claim 1, wherein a complex fluoride is comprised in an amount of 1.1 10⁻⁴ mol/l to 0.05 mol/l, based on the cations, the aqueous composition having a pH in the range from 1.5 to 5.0.

3. The method according to claim 1 or 2, wherein the anionic polyelectrolyte comprises or consists of at least one polysaccharide based on pectins or gellan gum.

4. The method according to claim 1 or 2, wherein the aqueous composition and/or the organic coating produced therefrom comprises a mixture of at least two different anionic polyelectrolytes.

5. The method according to claim 4, wherein the aqueous composition and/or the organic coating produced therefrom comprises a mixture of two pectins.

6. The method according to one or more of the preceding claims, wherein the aqueous composition and/or the organic coating produced therefrom comprises at least one anionic polysaccharide selected from those having a degree of esterification of the carboxyl function in the range from 5% to 75% based on the total number of alcohol and carboxyl groups.

7. The method according to one or more of the preceding claims, wherein the aqueous composition and/or the organic coating produced therefrom comprises at least one anionic polysaccharide selected from those having a molecular weight in the range from 500 to 1 000 000 g/mol⁻¹.

8. The method according to one or more of the preceding claims, wherein the aqueous composition and/or the organic coating produced therefrom comprises at least one anionic polysaccharide selected from those having a degree of amidation of the carboxyl functions in the range from 1% to 50% and a degree of epoxidation of the carboxyl functions of up to 80%.

9. The method according to one or more of the preceding claims, wherein the anionic polyelectrolytes are modified or have been modified with adhesion-promoting tie groups selected from the group consisting of chemical groups of polyfunctional epoxides, isocyanates, primary amines, secondary amines, tertiary amines, quaternary amines, amides, imides, imidazoles, formamides, Michael reaction products, carbodiimides, carbenes, cyclic carbenes, cyclocarbonates, polyfunctional carboxylic acids, amino acids, nucleic acids, methacrylamides, polyacrylic acids, polyacrylic acid derivatives, polyvinyl alcohols, polyphenols, polyols having at least one alkyl and/or aryl radical, caprolactam, phosphoric acids, phosphoric esters, epoxide esters, sulfonic acids, sulfonic esters, vinylsulfonic acids, vinylphosphonic acids, catechol, silanes and also the silanols and/or siloxanes formed from them, triazines, thiazoles, thiazines, dithiazines, acetals, hemiacetals, quinones, saturated fatty acids, unsaturated fatty acids, alkyds, esters, polyesters, ethers, glycols, cyclic ethers, crown ethers, anhydrides, and also of acetylacetones and of beta-diketo groups, carbonyl groups, and hydroxyl groups.

10. The method according to one or more of the preceding claims, wherein the aqueous composition and/or the organic coating produced therefrom includes at least one complexing agent for metal cations, or a polymer which has been modified for complexation of metal cations.

11. The method according to claim 10, wherein the aqueous composition and/or the organic coating produced therefrom includes at least one complexing agent selected from those based on maleic acid, alendronic acid, itaconic acid, citraconic acid or mesaconic acid, or the anhydrides or monoesters of these carboxylic acids.

12. The method according to one or more of the preceding claims, wherein the aqueous composition and/or the organic coating produced therefrom comprises at least one kind of cations selected from those based on cationic salts selected from the group consisting of melamine salts, nitroso salts, oxonium salts, ammonium salts, salts with quaternary nitrogen cations, salts of ammonium derivatives, and metal salts of Al, B, Ba, Ca, Cr, Co, Cu, Fe, Hf, In, K, Li, Mg, Mn, Mo, Na, Nb, Ni, Pb, Sn, Ta, Ti, V, W, Zn and/or Zr.

13. The method according to claim 12, wherein cations selected that are extracted from the metallic surface and/or added to the aqueous composition are Al, Cu, Fe, Mg and/or Zn.

14. An aqueous composition, which, in an anionically stabilized dispersion of film-forming polymers having a solids content of 2 to 40 wt% and an average particle size of 10 to 1000 nm, which is stable in the pH range from 0.5 to 7.0, comprises at least one anionic polyelectrolyte in an amount of 0.01 to 5.0 wt%, based on the total mass of the resulting mixture, and also a complex fluoride selected from the group consisting of hexa- or tetrafluorides of the elements titanium, zirconium, hafnium, silicon, aluminum and/or boron in an amount of 1.1 10⁻⁶ mol/l to 0.30 mol/l, based on the cations, where the aqueous composition has a pH in the range from 0.5 to 7.0, where the at least one anionic polyelectrolyte is selected from polysaccharides based on alginates, pectins and gellan gum, and where the aqueous composition in the dispersion of film-forming polymers includes organic particles based on polyacrylates, polyurethanes, polyepoxides and/or hybrids thereof.

15. The aqueous composition according to claim 14, wherein the in a dispersion of film-forming polymers includes organic particles based on polyacrylates, polyurethanes, polyepoxides and/or hybrids thereof, includes at least one complexing agent selected from those based on maleic acid, alendronic acid, itaconic acid, citraconic acid or mesaconic acid or anhydrides or monoesters of these carboxylic acids, and at least one anionic polyelectrolyte based on pectins or gellan gum.

## Revendications

1. Procédé de revêtement de surfaces métalliques de substrats comprenant les étapes, ou constitué des étapes :
I. fourniture d'un substrat ayant une surface métallique nettoyée,
II. mise en contact et revêtement de surfaces métalliques avec une composition aqueuse sous forme d'une dispersion et/ou d'une suspension,
III. éventuellement rinçage du revêtement organique et
IV. séchage et/ou cuisson du revêtement organique ou
V. éventuellement séchage du revêtement organique et application d'une composition de revêtement, équivalente ou supplémentaire, avant un séchage et/ou une cuisson,
**caractérisé en ce que**,
dans l'étape II, le revêtement avec une composition aqueuse est réalisé sous forme d'une dispersion et/ou d'une suspension, qui contient un fluorure complexe choisi dans le groupe consistant en des hexa- ou des tétrafluorures des éléments titane, zirconium, hafnium, silicium, aluminium et/ou bore en une quantité de 1,1.10⁻⁶ mol/l à 0,30 mol/l par rapport aux cations, dans lequel on ajoute à une dispersion anioniquement stabilisée de polymères filmogènes ayant une teneur en extrait sec de 2 à 40 % en poids et une granulométrie moyenne de 10 à 1 000 nm, qui est stable dans la plage de pH de 0,5 à 7,0, au moins un polyélectrolyte anionique en une quantité de 0,01 à 5,0 % en poids par rapport à la masse totale du mélange obtenu, dans lequel la composition aqueuse présente un pH dans la plage de 0,5 à 7,0 et forme un revêtement à base d'un gel ionogène, qui se lie à des cations extraits en solution de la surface métallique et ces cations proviennent d'un étage de prétraitement et/ou de la mise en contact de l'étape II, dans lequel l'au moins un polyélectrolyte anionique est choisi parmi les polysaccharides à base d'alginates, de pectines et de gomme gellane, et dans lequel la composition aqueuse présente, dans la dispersion de polymères filmogènes, une teneur en particules organiques à base de polyacrylates, de polyuréthanes, de polyépoxydes et/ou de leurs hybrides.

2. Procédé selon la revendication 1, **caractérisé en ce qu'**un fluorure complexe est contenu en une quantité de 1,1.10⁻⁴ mol/l à 0,05 mol/l par rapport aux cations, la composition aqueuse présentant un pH dans la plage de 1,5 à 5,0.

3. Procédé selon la revendication 1 ou 2, **caractérisé en ce que** le polyélectrolyte anionique contient, ou en est constitué, au moins un polysaccharide à base de pectines ou de gomme gellane.

4. Procédé selon la revendication 1 ou 2, **caractérisé en ce que** la composition aqueuse et/ou le revêtement organique fabriqué à partir d'elle contient un mélange d'au moins deux polyélectrolytes anioniques différents.

5. Procédé selon la revendication 4, **caractérisé en ce que** la composition aqueuse et/ou le revêtement organique fabriqué à partir d'elle contient un mélange de deux pectines.

6. Procédé selon l'une ou plusieurs des revendications précédentes, **caractérisé en ce que** la composition aqueuse et/ou le revêtement organique fabriqué à partir d'elle contient au moins un polysaccharide anionique choisi parmi ceux ayant un degré d'estérification de la fonction carboxy dans la plage de 5 à 75 % par rapport au nombre total des groupes alcool et carboxy.

7. Procédé selon l'une ou plusieurs des revendications précédentes, **caractérisé en ce que** la composition aqueuse et/ou le revêtement organique fabriqué à partir d'elle contient au moins un polysaccharide anionique choisi parmi ceux ayant une masse moléculaire dans la plage de 500 à 1 000 000 g/mol⁻¹.

8. Procédé selon l'une ou plusieurs des revendications précédentes, **caractérisé en ce que** la composition aqueuse et/ou le revêtement organique fabriqué à partir d'elle contient au moins un polysaccharide anionique choisi parmi ceux ayant un degré d'amidation de la fonction carboxy dans la plage de 1 à 50 % et un degré d'époxydation des fonctions carboxy allant jusqu'à 80 %.

9. Procédé selon l'une ou plusieurs des revendications précédentes, **caractérisé en ce que** les polyélectrolytes anioniques subissent une modification ou sont modifiés avec des groupes d'accrochage conférant un accrochage choisis dans le groupe constitué de groupes chimiques d'époxydes multifonctionnels, d'isocyanates, d'amines primaires, d'amines secondaires, d'amines tertiaires, d'amines quaternaires, d'amides, d'imides, d'imidazoles, de formamides, de produits de réaction de Michael, de carbodiimides, de carbènes, de carbènes cycliques, de cyclocarbonates, d'acides carboxyliques multifonctionnels, d'acides aminés, d'acides nucléiques, de méthacrylamides, de poly(acides acryliques), de dérivés de poly(acides acryliques), de poly(alcools vinyliques), de polyphénols, de polyols ayant au moins un radical alkyle et/ou aryle, de caprolactame, d'acides phosphoriques, d'ester d'acides phosphoriques, d'esters époxydiques, d'acides sulfoniques, d'esters d'acides sulfoniques, d'acides vinylsulfoniques, d'acides vinylphosphoniques, de catéchol, de silanes ainsi que des silanols et/ou siloxanes formés à partir d'eux, de triazines, de thiazoles, de thiazines, de dithiazines, d'acétals, de semi-acétals de quinones, d'acides gras saturés, d'acides gras insaturés, d'alkydes, d'esters, de polyesters, d'éthers, de glycols, d'éthers cycliques, d'éthers couronnes, d'anhydrides ainsi que d'acétylacétones, et de groupes bêta-dicéto, de groupes carbonyle et de groupes hydroxy.

10. Procédé selon l'une ou plusieurs des revendications précédentes, **caractérisé en ce que** la composition aqueuse et/ou le revêtement organique fabriqué à partir d'elle présentent une teneur en au moins un complexant de cations métalliques ou un polymère qui est modifié avec effet de complexation de cations métalliques.

11. Procédé selon la revendication 10, **caractérisé en ce que** la composition aqueuse et/ou le revêtement organique fabriqué à partir d'elle présentent une teneur en au moins un complexant choisi parmi ceux à base d'acide maléique, d'acide alendronique, d'acide itaconique, d'acide citraconique ou d'acide mésaconique ou les anhydrides ou semi-esters de ces acides carboxyliques.

12. Procédé selon l'une ou plusieurs des revendications précédentes, **caractérisé en ce que** la composition aqueuse et/ou le revêtement organique fabriqué à partir d'elle contiennent au moins un type de cations choisis parmi ceux à base de sels à effet cationique choisi dans le groupe consistant en les sels de mélamine, les sels nitroso, les sels d'oxonium, les sels d'ammonium, les sels avec des cations de l'azote quaternaire, les sels de dérivés de l'ammonium et les sels métalliques d'Al, B, Ba, Ca, Cr, Co, Cu, Fe, Hf, In, K, Li, Mg, Mn, Mo, Na, Nb, Ni, Pb, Sn, Ta, Ti, V, W, Zn et/ou Zr.

13. Procédé selon la revendication 12, **caractérisé en ce qu'**on choisit en tant que cations qui ont subi une extraction ou sont extraits de la surface métallique et/ou qui subissent une addition et/ou sont ajoutés à la composition aqueuse, Al, Cu, Fe, Mg et/ou Zn.

14. Composition aqueuse qui, dans une dispersion anioniquement stabilisée de polymères filmogènes ayant une teneur en extrait sec de 2 à 40 % en poids et une granulométrie moyenne de 10 à 1 000 nm, qui est stable dans la plage de pH de 0,5 à 7,0, au moins un polyélectrolyte anionique en une quantité de 0,01 à 5,0 % en poids par rapport à la masse totale du mélange obtenu ainsi qu'un fluorure complexe choisi dans le groupe consistant en les hexa- ou tétrafluorures des éléments titane, zirconium, hafnium, silicium, aluminium et/ou bore en une quantité de 1,1.10⁻⁶ mol/l à 0,30 mol/l par rapport aux cations, la composition aqueuse présentant un pH dans la plage de 0,5 à 7,0, l'au moins un polyélectrolyte anionique étant choisi parmi les polysaccharides à base d'alginates, de pectines et de gomme gellane et la composition aqueuse présentant dans la composition de polymères filmogènes une teneur en particules organiques à base de polyacrylates, de polyuréthanes, de polyépoxydes et/ou de leurs hybrides.

15. Composition aqueuse selon la revendication 14, **caractérisée en ce que** la dans une dispersion de polymères filmogènes présente une teneur en particules organiques à base de polyacrylates, de polyuréthanes, de polyépoxydes et/ou de leurs hybrides, une teneur en au moins un complexant choisi parmi ceux à base d'acide maléique, d'acide alendronique, d'acide itaconique, d'acide citraconique ou d'acide mésaconique ou des anhydrides ou semi-esters de ces acides carboxyliques et au moins un polyélectrolyte anionique à base de pectines ou de gomme gellane.
